# EUROPÄISCHE PATENTSCHRIFT

(11) **EP 0 712 903 B1**
(45) Veröffentlichungstag und Bekanntmachung des Hinweises auf die Patenterteilung: **03.01.2001**
(21) Anmeldenummer: 95117104.0
(22) Anmeldetag: 31.10.1995
(51) Int. Cl.: C09B 35/56, C09D 11/00

(54) **Wasserlösliche Polyazofarbstoffe**
Water-soluble polyazo dyes
Colorants polyazoiques solubles dans l'eau

(30) Priorität: 19.11.1994 DE 4441232
(43) Veröffentlichungstag der Anmeldung: 22.05.1996
(73) Patentinhaber: Clariant GmbH, 65929 Frankfurt am Main (DE)
(72) Erfinder: Bauer, Wolfgang, Dr., D-63477 Maintal (DE); Baumgart, Dieter, Dr., D-63329 Egelsbach (DE); Zöller, Walter, D-63911 Klingenberg (DE)

(56) Entgegenhaltungen:
- EP-A- 0 218 143
- DE-A- 2 914 002
- FR-A- 1 379 229
- CHEMICAL ABSTRACTS, vol. 94, no. 20, 18.Mai 1981 Columbus, Ohio, US; abstract no. 158524z, CANON K.K. 'Jet-printing inks' Seite 94; & JP-A-55 151 071
- CHEMICAL ABSTRACTS, vol. 108, no. 2, 11.Januar 1988 Columbus, Ohio, US; abstract no. 7635t, H.KAMIMURA ET AL. 'Water-thinned jet-printing inks' Seite 87; & JP-A-62 156 177 (RICOH CO., LTD.) 11.Juli 1987

## Beschreibung

Die vorliegende Erfindung betrifft wasserlösliche Polyazofarbstoffe, Verfahren zu ihrer Herstellung und ihre Verwendung.

Polyazofarbstoffe sind bereits bekannt und beispielsweise in FR-A 1 379 229, DE-A 29 14 002, EP-A2-0 218 143, C.A.107, 156638n, C.A.94, 158524, oder C.A.108, 7635t, beschrieben. Sie können zum Färben von natürlichen und synthetischen Fasermaterialien, wie Baumwolle, Regeneratcellulose, Papier, Polyamid oder Wolle, und auch zum Färben von Leder verwendet werden.

Darüberhinaus ist es bekannt, daß bestimmte Trisazofarbstoffe zur Herstellung von Schreibtinten und Aufzeichnungsflüssigkeiten verwendet werden können (siehe beispielsweise EP-A 212 345, DE-A 37 43 527 oder DE-A 40 25 611).

Es wurde nun überraschend gefunden, daß die erfindungsgemäßen Polyazofarbstoffe hinsichtlich ihrer Färbeeigenschaften deutliche Vorteile im Vergleich zum Stand der Technik aufweisen, was besonders beim Färben von Leder und Papier zu Tage tritt. Darüberhinaus eignen sie sich auch hervorragend zur Herstellung von Schreibtinten und Aufzeichnungsflüssigkeiten für das Ink-jet-Druckverfahren.

Die vorliegende Erfindung betrifft somit wasserlösliche Polyazofarbstoffe der allgemeinen Formel I 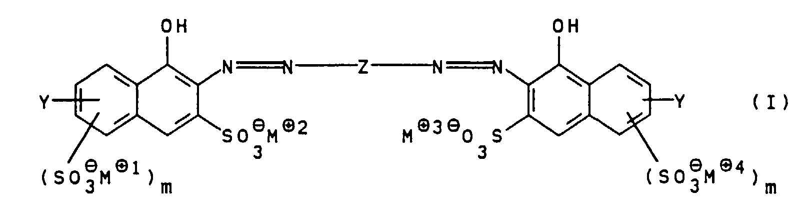 worin
- Y: 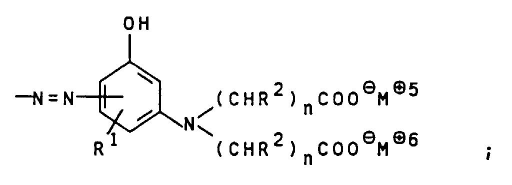
- Z: 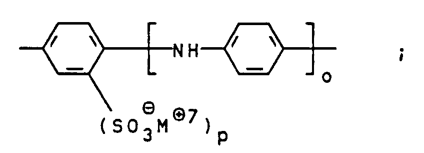
- R¹: Wasserstoff, (C₁-C₄)-Alkyl oder Halogen;
- R²: Wasserstoff oder (C₁-C₄)-Alkyl;
- M^{⊕1} bis M^{⊕7}: unabhängig voneinander ein Kation;
- m, o und p: unabhängig voneinander 0 oder 1; und
- n 1 oder 2: bedeutet.

(C₁-C₄)-Alkyl bedeutet insbesondere Methyl, Ethyl, n-Propyl, i-Propyl, n-Butyl, i-Butyl, sek-Butyl oder tert-Butyl.

Halogen bedeutet insbesondere Fluor, Chlor, Brom oder Iod, wobei Chlor und Brom bevorzugt sind.

Ein für einen der Reste M^{⊕} stehendes Kation kann anorganisch oder organisch sein. Geeignete anorganische Kationen sind insbesondere Alkali- und Erdalkalikationen. Aufgrund ihrer zweifach positiven Ladung stehen Erdalkalikationen dabei jeweils für zwei Reste M^{⊕}.

Bevorzugte anorganische Kationen sind ganz besonders bevorzugt diejenigen von Lithium und Natrium.

Geeignete organische Kationen sind inbesondere Ammoniumionen der allgemeinen Formel II 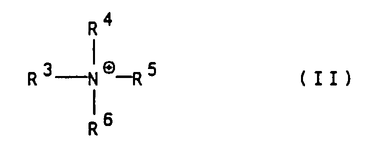 worin
R³ bis R⁶ unabhängig voneinander Wasserstoff,
(C₁-C₄)-Alkyl, Hydroxy-(C₁-C₄)-alkyl oder Hydroxyethoxy-(C₁-C₄)-alkyl bedeuten.

Die Gruppe Y substituiert bevorzugt die Positionen 1, 2 oder 3 des Naphthalingerüstes, wobei Position 2 besonders bevorzugt ist. Die Gruppen -(SO₃^{⊖} M^{⊕1})ₘ und -(SO₃^{⊖}M^{⊕4})ₘ substituieren bevorzugt die Positionen 3 und 4 des Naphthalingerüstes.

In bevorzugten Polyazofarbstoffen der allgemeinen Formel I stehen m für O, R¹ für Wasserstoff und R² für Wasserstoff oder Methyl.

In besonders bevorzugten Polyazofarbstoffen der allgemeinen Formel I stehen R¹ und R² für Wasserstoff; m für O; n, o und p für 1 und M^{⊕1} bis M^{⊕7} unabhängig voneinander für Li^{⊕}, Na^{⊕} oder ein Ammoniumion der allgemeinen Formel II, worin R³ bis R⁶ unabhängig voneinander Wasserstoff oder Hydroxy-(C₁-C₄)-alkyl bedeuten.

Die erfindungsgemäßen Polyazofarbstoffe der allgemeinen Formel I können in an sich bekannter Weise hergestellt werden. Beispielsweise wird eine Verbindung der allgemeinen Formel III 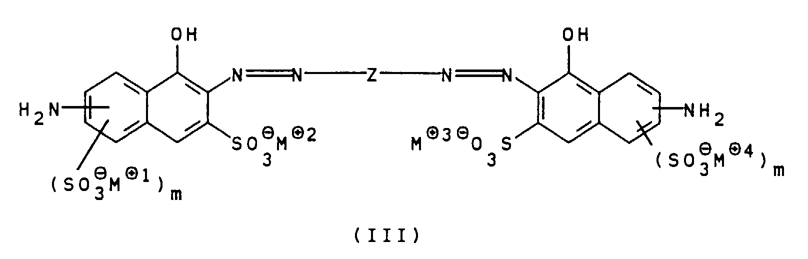 worin
Z, m und M^{⊕} bis M^{⊕4} wie oben angegeben definiert sind, bis-diazotiert und mit einer Verbindung der allgemeinen Formel IV 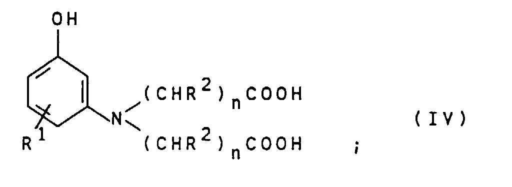 worin
R¹, R² und n wie oben angegeben definiert sind, gekuppelt und gegebenenfalls in die gewünschte Salzform überführt. Bevorzugt wird diese Kupplungsreaktion bei pH-Werten von 7 bis 12, besonders bevorzugt 7,5 bis 9,5, durchgeführt.

Die Verbindungen der allgemeinen Formel III können zum Beispiel dadurch hergestellt werden, daß ein Diamin der allgemeinen Formel V

H₂N-Z-NH₂ (V)

worin
Z wie oben angegeben definiert ist, bis-diazotiert und mit einer Verbindung der allgemeinen Formel VI 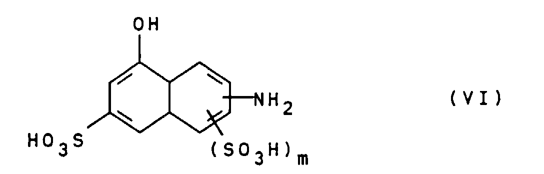 worin
m wie oben angegeben definiert ist, gekuppelt wird. Auch diese Kupplungsreaktion wird bevorzugt bei pH-Werten von 7 bis 12, besonders bevorzugt 7,5 bis 9,5 durchgeführt.

Es ist bevorzugt, die Verbindungen der allgemeinen Formel III nicht zu isolieren, sondern an deren Herstellung direkt die oben beschriebene weitere Bis-Diazotierung und Kupplung anzuschließen.

Die Verbindungen der allgemeinen Formel IV können durch Alkylierung von Verbindungen der allgemeinen Formel VII 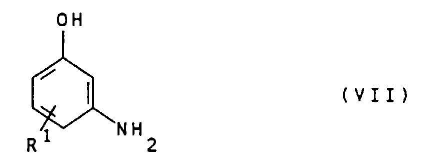 worin
R¹ wie oben angegeben definiert ist, mit Verbindungen der allgemeinen Formel VIII

X-(CHR²)ₙ-COOH (VIII)

worin
R² und n wie oben angegeben definiert sind und X für Chlor, Brom oder Iod steht, erhalten werden. Diese Umsetzung wird vorzugsweise in wäßrigem Reaktionsmedium bei pH-Werten von 3 bis 8, besonders bevorzugt 5 bis 8, und bei Temperaturen von 40 bis 140°C, besonders bevorzugt 80 bis 120°C, durchgeführt. Die erhaltenen Verbindungen der allgemeinen Formel IV werden vorzugsweise ohne Zwischenisolierung als wäßrige Lösung in die Umsetzung mit den Verbindungen der allgemeinen Formel III eingesetzt.

Geeignete Verbindungen der allgemeinen Formel VII sind beispielsweise 3-Aminophenol, 4-Methyl-3-aminophenol, 5-Amino-2-methyl-phenol, 4-Chlor-3-aminophenol und 4-Ethyl-3-aminophenol. Besonders bevorzugt ist 3-Aminophenol.

Geeignete Verbindungen der allgemeinen Formel VIII sind beispielsweise Monochloressigsäure, Monobromessigsäure, 2-Chlorpropionsäure, 2-Brompropionsäure, 3-Chlorpropionsäure, 3-Brompropionsäure und deren Salze, wobei Monochloressigsäure und Natrium-monochloracetat bevorzugt sind.

Geeignete Verbindungen der allgemeinen Formel V sind beispielsweise 1,4-Phenylendiamin, 1,4-Phenylendiamin-2-sulfonsäure, 4,4'-Diaminodiphenylamin, 4,4'-Diaminodiphenylamin-2-sulfonsäure. 4,4'-Diaminodiphenylamin-2-sulfonsäure ist besonders bevorzugt.

Geeignete Verbindungen der allgemeinen Formel VI sind beispielsweise 2-Amino-8-hydroxynaphthalin-6-sulfonsäure, 2-Amino-8-hydroxynaphthalin-3,6-disulfonsäure, 3-Amino-8-hydroxynaphthalin-6-sulfonsäure, 1-Amino-8-hydroxynaphthalin-4,6-disulfonsäure und 1-Amino-8-hydroxynaphthalin-3,6-disulfonsäure, von denen 2-Amino-8-hydroxynaphthalin-6-sulfonsäure besonders bevorzugt ist.

Die Verbindungen der allgemeinen Formeln V, VI, VII und VIII sind bekannt und käuflich zu erwerben und/oder nach bekannten Herstellungsverfahren erhältlich.

Die erfindungsgemäßen Polyazofarbstoffe der allgemeinen Formel I können nach der Kupplungsreaktion durch Zusatz von Mineralsäuren in Form der freien Säure (M^{⊕1} bis M^{⊕7} = H^{⊕}) isoliert werden, die durch Waschen mit Wasser oder angesäuertem Wasser von anorganischen Salzen befreit werden kann. Die so erhaltene salzarme Farbsäure kann dann in wäßrigem Medium mit Hydroxiden und/oder Carbonaten, beispielsweise LiOH, Li₂CO₃, NaOH, Na₂CO₃ oder K₂CO₃ oder mit Aminen neutralisiert werden. Dabei sind bevorzugte Amine, insbesondere Ammoniak, Ethanolamin, Diethanolamin, Triethanolamin, N-Methyl-N-ethanolamin, N-Methyl-N,N-diethanolamin, 2-(2-Hydroxyethoxy)-ethanamin, Di-2-(2-hydroxy-ethoxy)-ethanamin und Tri-2-(2-hydroxyethoxy)-ethanamin.

Die erfindungsgemäßen Polyazofarbstoffe der allgemeinen Formel I eignen sich in hervorragender Weise zum Färben von natürlichen und synthetischen Fasermaterialien, insbesondere zeichnen sie sich auch in der Farbstärke auf Leder aus.

Außerdem eignen sie sich in ausgezeichneter Weise zur Herstellung von Schreibtinten und Aufzeichnungsflüssigkeiten.

Die oben beschriebenen wäßrigen Lösungen der erfindungsgemäßen Polyazofarbstoffe der allgemeinen Formel I können direkt für die Herstellung von Aufzeichnungsflüssigkeiten verwendet werden. Es ist aber auch möglich, sie zunächst durch Trocknung, z.B. Sprühtrocknung, zu isolieren und anschließend zu Aufzeichnungsflüssigkeiten weiterzuverarbeiten.

Die fertigen Aufzeichnungsflüssigkeiten enthalten im allgemeinen 0,5 bis 15 Gew.% Farbstoff (trocken gerechnet), 0 bis 99 Gew.% Wasser und 0,5 bis 99,5 Gew.% Lösungsmittel und/oder Feuchthaltemittel. Insbesondere enthalten die fertigen Aufzeichnungsflüssigkeiten 0,5 bis 15 Gew.% Farbstoff (trocken gerechnet), 40 bis 85 Gew.% Wasser und 15 bis 50 Gew.% Lösungsmittel und/oder Feuchthaltemittel. Die fertigen Aufzeichnungsflüssigkeiten enthalten in der Regel noch weitere, nachstehend erwähnte Zusätze.

Das zur Herstellung der Aufzeichnungsflüssigkeiten benutzte Wasser wird vorzugsweise in Form von destilliertem oder entsalztem Wasser eingesetzt. Neben Wasser kann in den Aufzeichnungsflüssigkeiten auch noch ein organisches wasserlösliches Lösungsmittel oder ein Gemisch derartiger Lösungsmittel vorhanden sein. Geeignete Lösungsmittel sind z.B. ein- und mehrwertige Alkohole, deren Ether und Ester, so z.B. Alkanole, insbesondere mit 1 bis 4 C-Atomen, wie z.B. Methanol, Ethanol, Propanol, Isopropanol, Butanol, Isobutanol, tert.-Butanol; zwei- und dreiwertige Alkohole, insbesondere solche mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glyzerin, Diethylenglykol, Dipropylenglykol; Polyalkylenglykole, wie z.B. Triethylenglykol, Polyethylenglykol, Tripropylenglykol, Polypropylenglykol; niedere Alkylether von mehrwertigen Alkoholen, wie z.B Ethylenglykol-monomethyl-oder -ethyl- oder -propyl- oder -butyl-ether, Diethylenglykol-mono-methyl- oder -ethyl-ether, Triethylenglykol-mono-methyl- oder -ethyl-ether; Ketone und Ketoalkohole, insbesondere solche mit 3 bis 7 C-Atomen, wie z.B. Aceton, Methylethyl-keton, Diethyl-keton, Methyl-isobutyl-keton, Methylpentyl-keton, Cyclopentanon, Cyclohexanon, Diacetonalkohol; Ether, wie z.B. Dibutylether, Tetrahydrofuran, Dioxan; Ester, wie z.B. Ethylformiat, Methylformiat, Methylacetat, Ethylacetat, Propylenacetat, Butylacetat, Phenylacetat, Ethylglykolmono-ethylether-acetat, Essigsäure-2-hydroxy-ethylester; Amide, wie z.B. Dimethylformamid, Dimethylacetamid, N-Methylpyrrolidon; ferner Harnstoff, Tetramethylharnstoff, Thiodiglykol.

Von den vorgenannten Substanzen wirken einige nicht nur als Lösungsmittel, sondern entfalten auch noch andere Eigenschaften. So wirken z.B. die mehrwertigen Alkohole auch als Feuchthaltemittel.

Weiter können den Aufzeichnungsmitteln zugesetzt sein: Konservierungsmittel, wie z.B. Phenol-Derivate, kationische, anionische oder nichtionische oberflächenaktive Substanzen (Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin, Diisopropylamin dienen hauptsächlich zur Erhöhung des pH-Wertes der Aufzeichnungsflüssigkeit. Sie sind in der Regel zu 0 bis 10 Gew.%, vorzugsweise 0,5 bis 5 Gew.% in der Aufzeichnungsflüssigkeit vorhanden.

Angaben über Zusammensetzungen von Tinten, insbesondere auch solchen für das Strahldruckverfahren, finden sich z.B. in DE-A-2 132 324, DE-A-2 160 475, USP 4 024 096, USP 4 024 397 und USP 4 070 322. Die genaue Zusammensetzung der Aufzeichnungsflüssigkeit wird selbstverständlich dem beabsichtigten Verwendungszweck angepaßt.

Bei Aufzeichnungsflüssigkeiten für das Tintenstrahl-Druckverfahren können je nach der Ausführungsform dieses Druckverfahrens, z.B. als Continuous-jet-, Intermittentjet-, Impulse-jet- oder Compound-jet-Verfahren gegebenenfalls noch weitere Additive, z.B. zur Pufferung des pH-Wertes, zur Einstellung der elektrischen Leitfähigkeit, der spezifischen Wärme, des thermischen Expansionskoeffizienten und der Leitfähigkeit zugesetzt werden.

Die Aufzeichnungsflüssigkeiten lassen sich in einfacher Weise durch Vermischen der Komponenten herstellen, was z.B. so erfolgen kann, daß ein Farbstoff der allgemeinen Formel I in Wasser gelöst oder eine bei der Herstellung des Farbstoffs der allgemeinen Formel I anfallende wäßrige Lösung gegebenenfalls weiter mit Wasser verdünnt wird und daß dann die übrigen Zusatzkomponenten, wie Lösungsmittel etc., zugemischt werden.

Die einen oder mehrere Farbstoffe der allgemeinen Formel I enthaltenden Aufzeichnungsflüssigkeiten eignen sich hervorragend zum Einsatz bei Druck-, Vervielfältigungs-, Markierungs-, Schreib-, Zeichen-, Stempel- oder Registrierverfahren, insbesondere aber auch bei dem Tintenstrahl-Druckverfahren. Dabei werden schwarze Drucke von hoher Qualität erhalten, die eine hohe Schärfe und Brillianz sowie gute Wasser-, Licht-und Abriebfestigkeit besitzen. Gegenüber vergleichbaren Farbstoffen weisen die erfindungsgemäßen Polyazofarbstoffe der allgemeinen Formel I eine höhere Wasserlöslichkeit sowie eine bessere Wasserechtheit, insbesondere auf schwach sauren Papierarten auf. Ferner sind sie aus toxikologischen Gründen vorteilhaft.

Bei der Lagerung erfindungsgemäßer Tinten tritt keine Abscheidung von Niederschlägen auf; ferner tritt beim Tintenstrahldruck beim Einsatz der erfindungsgemäßen Tinten keine Verstopfung der Düsen auf. Es treten auch keine Änderungen der physikalischen Eigenschaften erfindungsgemäßer Tinten ein, wenn sie in einem Tintenstrahldrucker längere Zeit unter ständiger Rezirkulation oder intermittierend unter zwischenzeitiger Abschaltung des Tintenstrahldruckers angewandt werden.

### Beispiel 1

### a) Herstellung von 3-Hydroxyphenylimino-diessigsäure, Di-Natriumsalz

21,8 g 3-Aminophenol werden in 50 ml Wasser eingetragen und auf 90°C geheizt. Anschließend gibt man eine Lösung von 47,7 g Natrium-monochloracetet in 75 ml Wasser zu, wobei der pH-Wert des Reaktionsgemischs durch Zugabe von 28,5 g Natriumhydrogencarbonat bei pH: 6,5 bis 7 gehalten wird. Zur Vervollständigung der Alkylierungsreaktion rührt man 4 Stunden bei 90 bis 95°C nach. Die erhaltene Lösung kann ohne Zwischenisolierung der erhaltenen 3-Hydroxyphenylimino-diessigsäure weiterverarbeitet werden.

### b) Herstellung des Farbstoffs

27,9 g 4,4'-Diaminodiphenylamin-2-sulfonsäure werden in einem Gemisch aus 200 ml Wasser und 50 g 30%iger Salzsäure unter Zugabe von Eis bei 0 bis 5°C mit einer Lösung von 13,8 g Natriumnitrit in 50 ml Wasser bis-diazotiert. Nach Zugabe der Natriumnitritlösung rührt man 1,5 Stunden bei 0 bis 5°C nach und beseitigt dann überschüssige salpetrige Säure mit Amidosulfonsäure.

Die erhaltene Lösung des Bis-Diazoniumsalzes wird anschließend zu einer Mischung von 47,8 g 2-Amino-8-hydroxynaphthalin-6-sulfonsäure, 300 ml Wasser, 16,0 g 50%ige Natronlauge, 46,8 g Natriumcarbonat und 150 g Eis gegeben.

Zur Vervollständigung der Kupplungsreaktion rührt man 2 Stunden bei pH 9 bis 9,5 nach.

Anschließend versetzt man die Suspension des erhaltenen Disazofarbstoffs mit 120 g 30%iger Salzsäure sowie 150 g Eis und diazotiert durch Zugabe einer Lösung von 13,8 g Natriumnitrit in 50 ml Wasser. Man rührt 2 Stunden bei 0 bis 5°C nach und entfernt dann überschüssige salpetrige Säure mit Amidosulfonsäure.

Die Suspension des erhaltenen Bis-Diazoniumsalzes wird im Verlauf von 1 Stunde zu einer Mischung der nach a) hergestellten wäßrigen Lösung von 3-Hydroxyphenyliminodiessigsäure, Dinatriumsalz, 27,4 g Natriumcarbonat und 150 g Eis gegeben.

Nach Vervollständigung der Kupplungsreaktion und Zugabe von 90 g 30%iger Salzsäure wird der ausgefallene Farbstoff filtriert und mit Wasser elektrolytfrei gewaschen.

Durch Neutralisation einer Suspension der erhaltenen Farbstoffpaste in 500 ml Wasser mit 70 ml 5 N Lithiumhydroxidlösung und anschließender Trocknung der erhaltenen Farbstofflösung erhält man 123,5 g des schwarzen Polyazofarbstoffs der allgemeinen Formel I mit R¹, R² = Wasserstoff, m = O, n, o und p = 1 und M^{⊕1} bis M^{⊕7} = Li^{⊕}.

Das Absorptionsspektrum dieses Farbstoffs in Wasser beträgt λₘₐₓ = 596nm.

Gemäß Angaben in folgender Tabelle können weitere erfindungsgemäße schwarze Farbstoffe hergestellt werden.

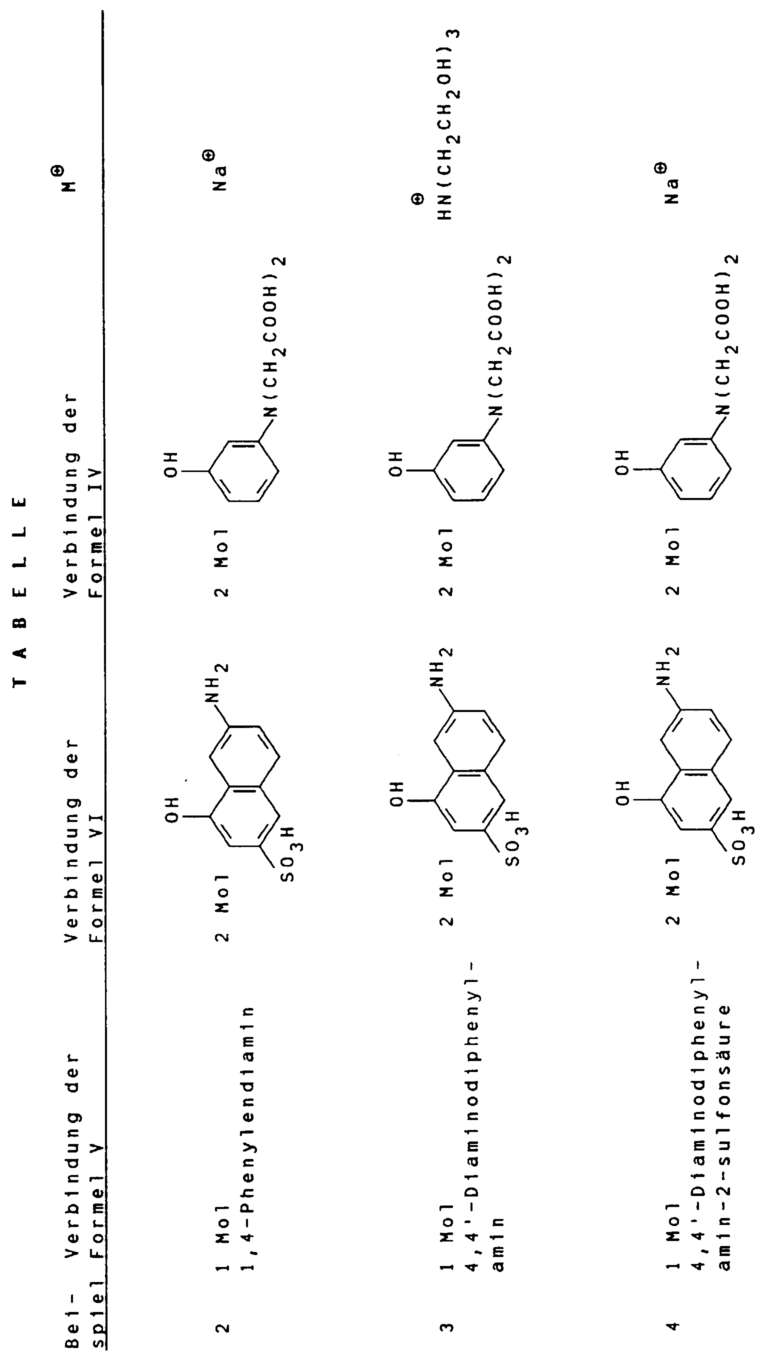

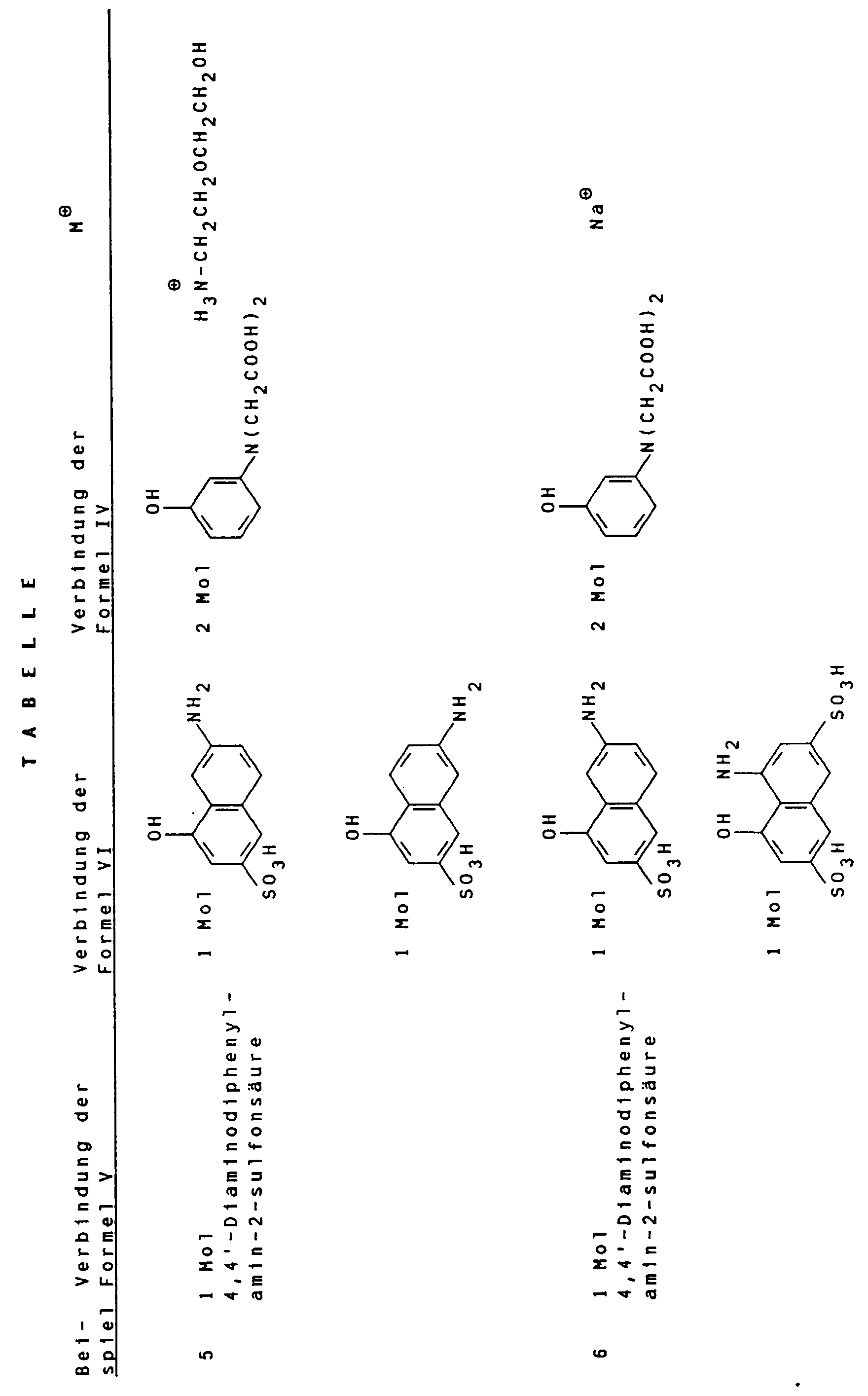

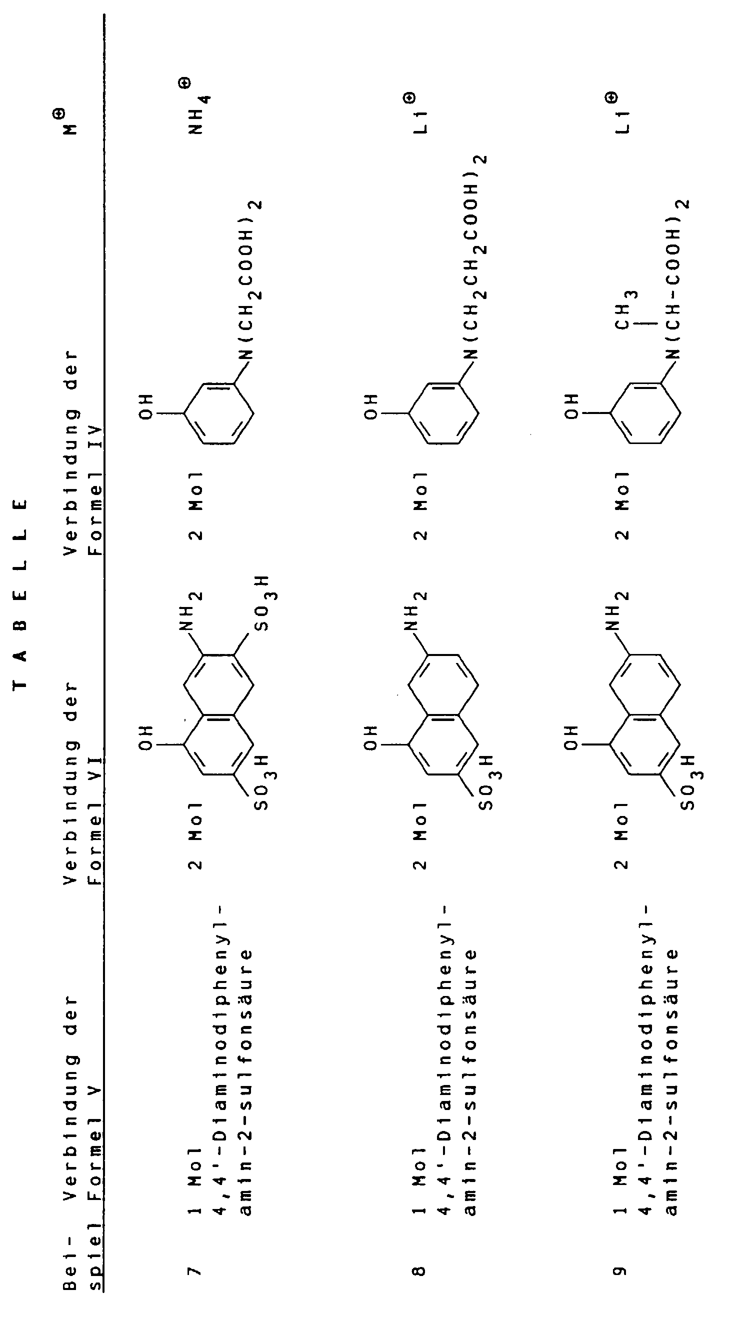

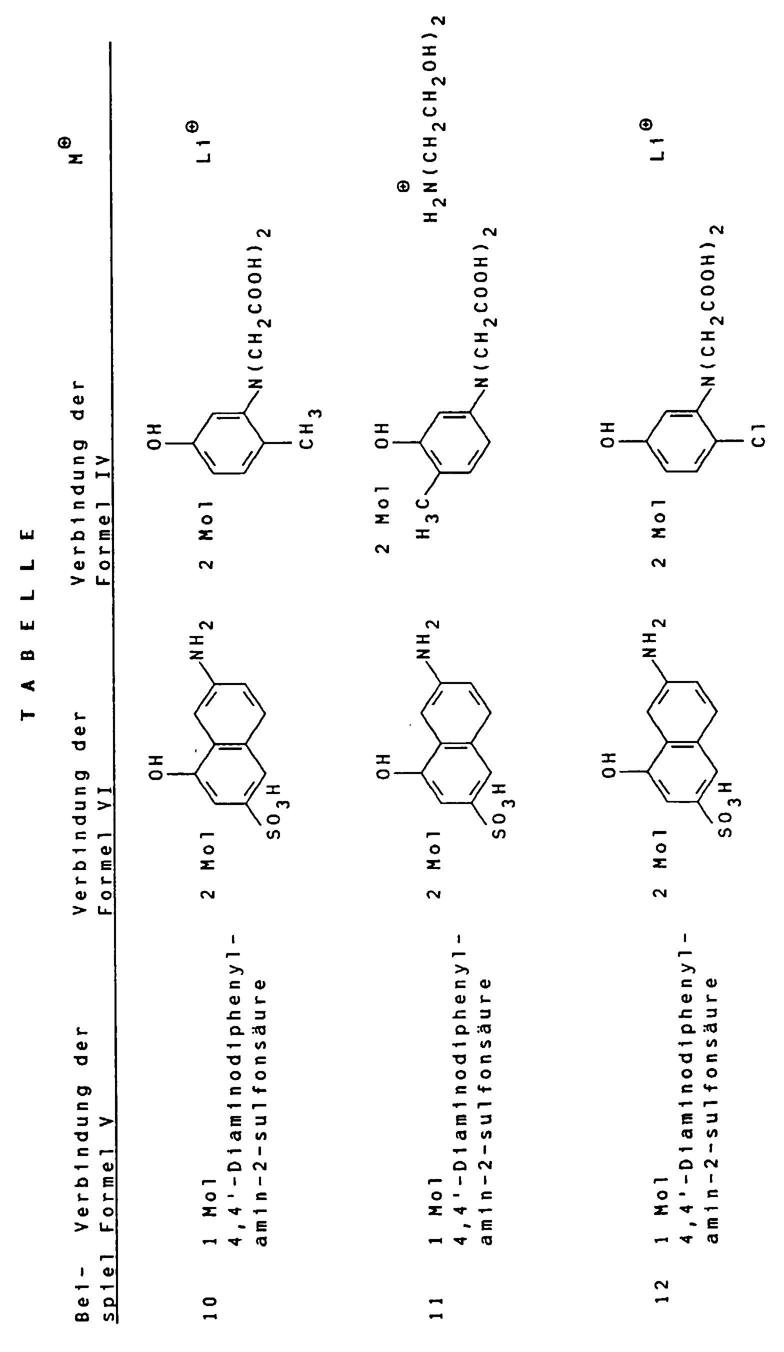

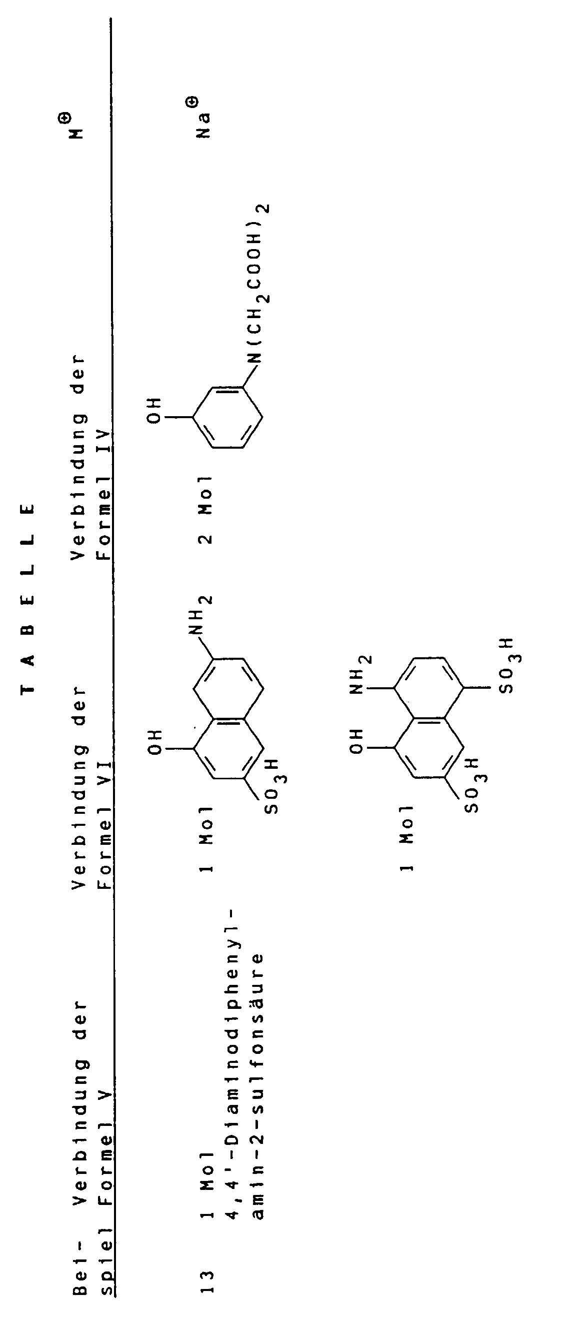

### Beispiel 14

Durch Mischen der Komponenten wird eine Aufzeichnungsflüssigkeit folgender Rezeptur hergestellt:

| | |
|---|---|
| 4 Gew.% | Farbstoff gemäß Beispiel 1, |
| 4 Gew.% | Triethanolamin, |
| 77 Gew.% | destilliertes Wasser, |
| 15 Gew.% | Diethylenglykol |

## Patentansprüche

1. Wasserlösliche Polyazofarbstoffe der allgemeinen Formel I 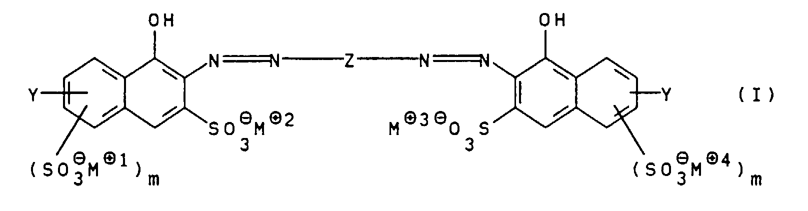 worin
Y 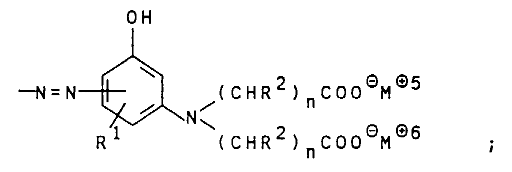
Z 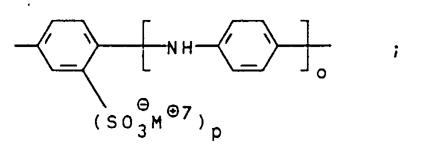
R¹ Wasserstoff, (C₁-C₄)-Alkyl oder Halogen;
R² Wasserstoff oder (C₁-C₄)-Alkyl;
M^{⊕1} bis M^{⊕7} unabhängig voneinander ein Kation;
m, o und p unabhängig voneinander 0 oder 1; und
n 1 oder 2 bedeutet.

2. Polyazofarbstoffe gemäß Anspruch 1, dadurch gekennzeichnet, daß M^{⊕1} bis M^{⊕7} unabhängig voneinander für das Lithiumkation, das Natriumkation oder für ein Ammoniumkation der allgemeinen Formel II 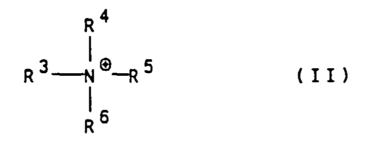 worin
R³ bis R⁶ unabhängig voneinander Wasserstoff,
(C₁-C₄)-Alkyl, Hydroxy-(C₁-C₄)-alkyl oder Hydroxyethoxy-(C₁-C₄)-alkyl bedeuten, stehen.

3. Polyazofarbstoffe gemäß Anspruch 1 und/oder 2, dadurch gekennzeichnet, daß m für O, R¹ für Wasserstoff und R² für Wasserstoff oder Methyl stehen.

4. Polyazofarbstoffe gemäß einem oder mehreren der Ansprüche 1 bis 3, dadurch gekennzeichnet, daß R¹ und R² für Wasserstoff; m für O; n, o und p für 1 und M^{⊕1} bis M^{⊕7} unabhängig voneinander für Li^{⊕}, Na^{⊕} oder ein Ammoniumion der allgemeinen Formel II gemäß Anspruch 2, worin R³ bis R⁶ unabhängig voneinander Wasserstoff oder Hydroxy-(C₁-C₄)-alkyl bedeuten, stehen.

5. Verfahren zur Herstellung von Polyazofarbstoffen gemäß einem oder mehreren der Ansprüche 1 bis 4, dadurch gekennzeichnet, daß eine Verbindung der allgemeinen Formel III 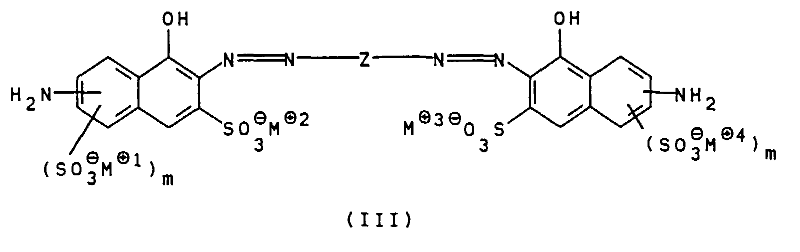 worin
Z, m und M^{⊕} bis M^{⊕4} wie oben angegeben definiert sind, bis-diazotiert und mit einer Verbindung der allgemeinen Formel IV 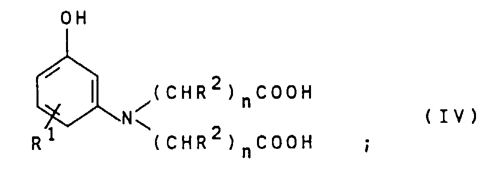 worin
R¹, R² und n wie in Anspruch 1 angegeben definiert sind, gekuppelt und gegebenenfalls in die gewünschte Salzform überführt wird.

6. Verwendung von Polyazofarbstoffen gemäß einem oder mehreren der Ansprüche 1 bis 4 zum Färben von Leder.

7. Verwendung von Polyazofarbstoffen gemäß einem oder mehreren der Ansprüche 1 bis 4 zur Herstellung von Schreibtinten und Aufzeichnungsflüssigkeiten.

8. Aufzeichnungsflüssigkeit, enthaltend 0,5 bis 15 Gew.% Farbstoff der in einem oder mehreren der Ansprüche 1 bis 4 angegebenen allgemeinen Formel I, 0 bis 99 gew.% Wasser, 0,5 bis 99,5 Gew.% Lösungsmittel und/oder Feuchthaltemittel.

9. Aufzeichnungsflüssigkeit nach Anspruch 8, enthaltend 0,5 bis 15 Gew.% Farbstoff, 40 bis 85 Gew.% Wasser, 15 bis 50 Gew.% Lösungsmittel und/oder Feuchthaltemittel.

## Claims

1. Water-soluble polyazo dyestuffs of the general formula I 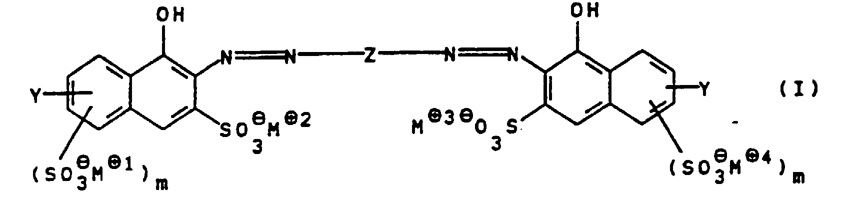 wherein
Y is 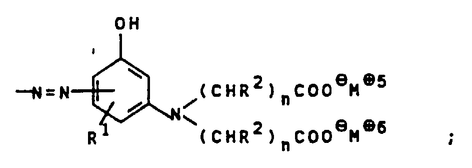
Z is 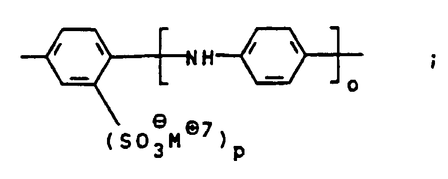
R¹ is hydrogen, (C₁-C₄)-alkyl or halogen;
R² is hydrogen or (C₁-C₄)-alkyl;
M^{⊕1} to M^{⊕7} independently of one another are a cation;
m, o and p independently of one another are 0 or 1; and
n is 1 or 2.

2. Polyazo dyestuffs according to Claim 1, characterized in that M^{⊕1} to M^{⊕7} independently of one another are the lithium cation, the sodium cation or an ammonium cation of the general formula II 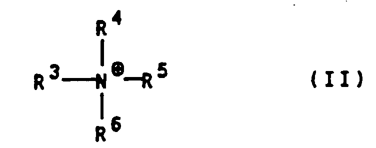 wherein
R³ to R⁶ independently of one another are hydrogen, (C₁-C₄)-alkyl, hydroxy-(C₁-C₄)-alkyl or hydroxyethoxy-(C₁-C₄)-alkyl.

3. Polyazo dyestuffs according to Claim 1 and/or 2, characterized in that m is 0, R¹ is hydrogen and R² is hydrogen or methyl.

4. Polyazo dyestuffs according to one or more of Claims 1 to 3, characterized in that R¹ and R² are hydrogen; m is 0; n, o and p are l and M^{⊕1} to M^{⊕7} independently of one another are Li^{⊕}, Na^{⊕} or an ammonium ion of the general formula II according to Claim 2, wherein R³ to R⁶ independently of one another are hydrogen or hydroxy - (C₁-C₄) -alkyl.

5. Process for the preparation of polyazo dyestuffs according to one or more of Claims 1 to 4, characterized in that a compound of the general formula III 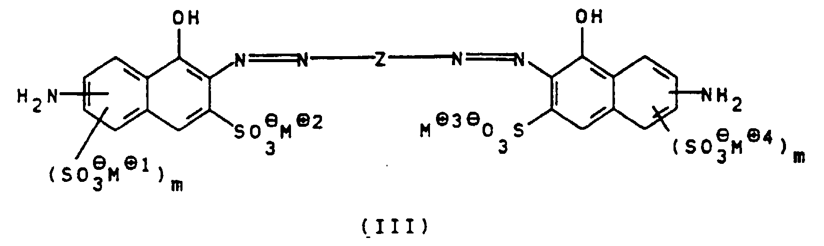 wherein
Z, m and M^{⊕} to M^{⊕4} are as defined above
is bis-diazotized and the product is coupled with a compound of the general formula IV 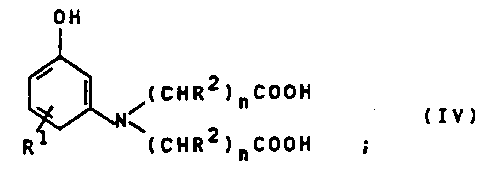 wherein
R¹, R² and n are as defined in Claim 1, and if appropriate the product is converted into the desired salt form.

6. Use of polyazo dyestuffs according to one or more of Claims 1 to 4 for dyeing leather.

7. Use of polyazo dyestuffs according to one or more of Claims 1 to 4 for the preparation of writing inks and recording liquids.

8. Recording liquid comprising 0.5 to 15% by weight of dyestuff of the general formula I given in one or more of Claims 1 to 4, 0 to 99% by weight of water and 0.5 to 99.5% by weight of solvent and/or humectant.

9. Recording liquid according to Claim 8, comprising 0.5 to 15% by weight of dyestuff, 40 to 85% by weight of water and 15 to 50% by weight of solvent and/or humectant.

## Revendications

1. Colorants polyazoïques hydrosolubles de formule générale I 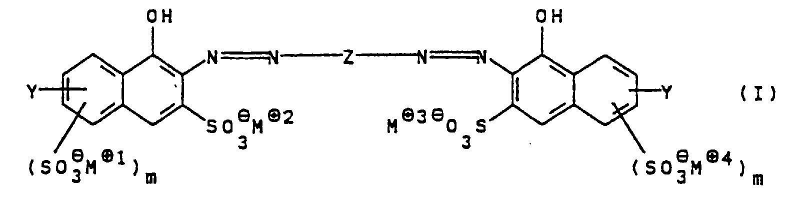 dans laquelle
Y représente 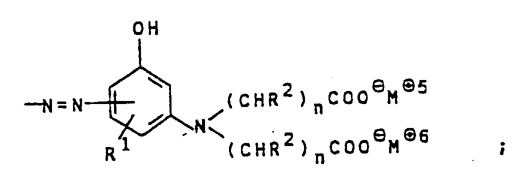
Z représente 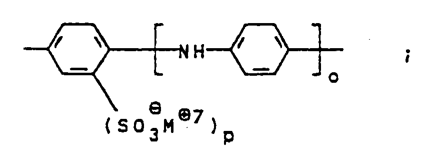
R¹ représente hydrogène, alkyle en C₁ à C₄ ou halogène ;
R² représente hydrogène ou alkyle en C₁ à C₄ ;
M^{⊕1} à M^{⊕7} représentent, indépendamment l'un de l'autre, un cation ;
m, o et p représentent, indépendamment l'un de l'autre, 0 ou 1 ; et
n représente 1 ou 2.

2. Colorants polyazoïques selon la revendication 1, caractérisés en ce que M^{⊕1} à M^{⊕7} sont, indépendamment l'un de l'autre, le cation lithium, le cation sodium ou un cation ammonium de formule générale II 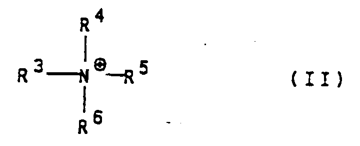 dans laquelle
R³ à R⁶ représentent, indépendamment l'un de l'autre, alkyle en C₁ à C₄, hydroxy-alkyle en C₁ à C₄ hydroxyéthoxy-alkyle en C₁ à C₄.

3. Colorants polyazoïques selon la revendication 1 et/ou 2, caractérisés en ce que m est O, R¹ est hydrogène et R² est hydrogène ou méthyle.

4. Colorants polyazoïques selon l'une ou plusieurs des revendications 1 à 3, caractérisés en ce que R¹ et R² sont hydrogène ; m est O ; n, o et p sont 1 et M^{⊕1} à M^{⊕7} sont, indépendamment l'un de l'autre, Li^{⊕}, Na^{⊕} ou un ion ammonium de formule générale II selon la revendication 2, dans laquelle R³ à R⁶ représentent, indépendamment l'un de l'autre, hydrogène ou hydroxy-alkyle en C₁ à C₄.

5. Procédé pour la préparation de colorants polyazoïques selon l'une ou plusieurs des revendications 1 à 4, caractérisé en ce qu'un composé de formule générale III 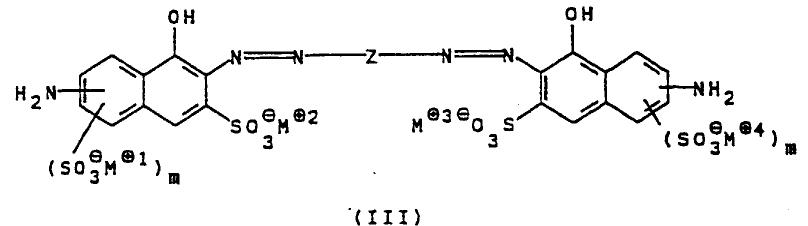 dans laquelle
Z, m et M^{⊕} à M^{⊕4} sont définis comme indiqué plus haut est bis-diazoté et copulé avec un composé de formule générale IV 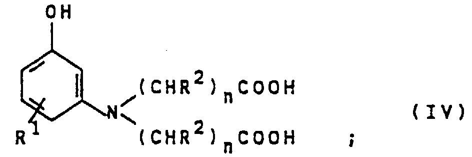 dans laquelle
R¹, R² et n sont définis comme indiqué à la revendication 1 et éventuellement transformé en la forme saline souhaitée.

6. Utilisation de colorants polyazoïques selon l'une ou plusieurs des revendications 1 à 4 pour teindre le cuir.

7. Utilisation de colorants polyazoïques selon l'une ou plusieurs des revendications 1 à 4 pour la préparation d'encres pour l'écriture et de liquides d'enregistrement.

8. Liquide d'enregistrement contenant 0,5 à 15 % en poids de colorant de formule générale I indiquée dans l'une ou plusieurs des revendications 1 à 4, 0 à 99 % en poids d'eau, 0,5 à 99,5 % en poids de solvant et/ou d'agent humidifiant.

9. Liquide d'enregistrement selon la revendication 8, contenant 0,5 à 15 % en poids de colorant, 40 à 85 % en poids d'eau, 15 à 50 % en poids de solvant et/ou d'agent humidifiant.
